# EUROPÄISCHE PATENTSCHRIFT

(11) **EP 2 154 185 B1**
(45) Veröffentlichungstag und Bekanntmachung des Hinweises auf die Patenterteilung: **19.01.2011**
(21) Anmeldenummer: 09167599.1
(22) Anmeldetag: 11.08.2009
(51) Int. Cl.: C08J 9/00, C08K 5/523

(54) **Halogenfreie, flammgeschützte Polyurethanschaumstoffe mit geringem Scorch**
Halogen-free flame-resistant polyurethane foams with low scorch
Mousses de polyuréthanes ignifuges sans halogène dotées d'un Scorch réduit

(30) Priorität: 16.08.2008 DE 102008038054
(43) Veröffentlichungstag der Anmeldung: 17.02.2010
(73) Patentinhaber: LANXESS Deutschland GmbH, 51369 Leverkusen (DE)
(72) Erfinder: Friedrich, Anne, 51375 Leverkusen (DE); Hansel, Jan-Gerd, 51469, Bergisch Gladbach (DE); Tebbe, Heiko, 41539, Dormagen (DE)

(56) Entgegenhaltungen:
- EP-A1- 0 001 215
- WO-A1-96/06885
- WO-A1-2006/060573
- WO-A2-03/095536
- US-A- 2 520 090
- US-A- 5 455 292
- US-A- 5 547 614
- US-A1- 2001 049 407

## Beschreibung

Die vorliegende Erfindung betrifft halogenfreie flammgeschützte Polyurethanschaumstoffe mit geringem Scorch, die als Flammschutzmittel ein Gemisch aus wenigstens einem Polyarylphosphat und wenigstens einem Monoarylphosphat enthalten, sowie ein Verfahren zur Herstellung solcher Schaumstoffe und deren Verwendung.

Polyurethanschaumstoffe werden in vielen Bereichen, wie Möbel, Matratzen, Transport, Bau und technische Dämmung als Kunststoffe eingesetzt. Zum Erreichen hoher Flammschutzanforderungen, wie sie für Materialien u. a. für den Automobil-, Bahn- und Flugzeuginnenausstattungsbereich sowie die Bauisolierung gefordert sind, müssen Polyurethanschaumstoffe in der Regel mit Flammschutzmitteln ausgerüstet werden. Hierzu ist eine Vielzahl unterschiedlicher Flammschutzmittel bekannt und kommerziell erhältlich. Deren Verwendung stehen allerdings vielfach erhebliche anwendungstechnische Probleme bzw. toxikologische Bedenken entgegen.

So treten bei Verwendung fester Flammschutzmittel wie z. B. Melamin, Ammoniumpolyphosphat und Ammoniumsulfat aufgrund von Sedimentation oder Aggregation dosiertechnische Probleme auf, die vielfach Modifikationen der Verschäumanlagen, d. h. aufwändige Umbauten und Anpassungen notwendig machen.

Die häufig eingesetzten Flammschutzmittel Tris(chlorethyl)phosphat, Tris(chlorisopropyl)phosphat und Tris(dichlorisopropyl)phosphat stellen zwar leicht dosierbare Flüssigkeiten dar. Von offenzelligen Polyurethanweichschaumsystemen für die Automobil-Innenausstattung wird jedoch in letzter Zeit immer mehr gefordert, dass die gasförmigen Emissionen (Volatile Organic Compounds, VOC) und vor allem die kondensierbaren Emissionen (Fogging) aus diesen Schäumen niedrige Grenzwerte nicht überschreiten sollen. Diesen Anforderungen werden die oben genannten Flüssigkeiten aufgrund ihrer zu hohen Flüchtigkeit nicht mehr gerecht.

Unter Fogging versteht man die unerwünschte Kondensation von verdampften flüchtigen Bestandteilen aus der Kraftfahrzeug-Innenausstattung an Glasscheiben, insbesondere an der Windschutzscheibe. Diese Erscheinung kann nach DIN 75 201 quantitativ beurteilt werden. Die Automobilindustrie fordert typischerweise, dass das Fogging-Kondensat nach der Methode DIN 75201 B weniger als 1 mg betragen darf.

Weiterhin werden aus ökotoxikologischen Gesichtspunkten sowie aufgrund verbesserter Brandnebenerscheinungen bezüglich Rauchgasdichte und Rauchgastoxizität halogenfreie Flammschutzmittel bevorzugt. Auch aus anwendungstechnischen Gründen können halogenfreie Flammschutzmittel von besonderem Interesse sein. So beobachtet man z. B. bei der Verwendung von halogenierten Flammschutzmitteln starke Korrosionserscheinungen an den zur Flammkaschierung von Polyurethanschäumen verwendeten Anlagenteilen. Dies kann auf die bei der Flammkaschierung halogenhaltiger Polyurethanschäume auftretenden Halogenwasserstoffsäure-Emissionen zurückgeführt werden.

Als Flammkaschierung bezeichnet man ein Verfahren zur Verbindung von Textilien und Schaumstoffen, bei der eine Seite einer Schaumstofffolie mit Hilfe einer Flamme angeschmolzen und in unmittelbarem Anschluss daran mit einer Textilbahn verpresst wird.

Von der Automobil- und Möbelindustrie wird zunehmend der Einsatz von Flammschutzmitteln gefordert, die insbesondere in offenzelligen Polyurethanschaumstoffen möglichst geringen Scorch verursachen.

Unter Scorch versteht man die unerwünschte Kernverfärbung in Polyurethanschaumstoffen. Scorch wird vermutlich durch thermischen und oxidativen Abbau des Polyurethanschaums in Gegenwart von Wasser verursacht. Mechanistische Untersuchungen zeigten, dass die Kernverfärbung auf Oxidationsprodukte der aromatischen Amine, die durch die Hydrolyse der Isocyanatgruppen resultieren, zurückzuführen ist [Luda, M. P., Bracco, P., Costa, L., Levchik, S. V. (2004). Discoloration in Fire Retardent Flexible Polyurethane Foam. Part 1. Characterization, Polym. Degrad. Stab., 83: 215-220; Levchik, S. V., Luda, M. P., Bracco, P., Nada, P., Costa, L. (2005). Discoloration in Fire Retardent Flexible Polyurethane Foam, J. Cellular Plast., 41 (3): 235-250]. Scorch wird im Allgemeinen im Zentrum des Polyurethanschaumblocks beobachtet, da hier die interne Temperatur für längere Zeit erhöht bleibt.

Flammschutzmittel können einen erheblichen Einfluss auf das Scorch-Verhalten eines Polyurethanschaumstoffs ausüben. Als Scorch-arme Flammschutzmittel gelten bromierte Diphenylether, Tetrabromphthalsäuredialkylester und Arylphosphate. Die Kombination von niedrigem Scorch und Halogenfreiheit ist demnach nur bei Arylphosphaten gegeben.

Triphenylphosphat ist ein gut verfügbares Arylphosphat und zum Beispiel aus EP 0 170 206 A1 als hochwirksames Flammschutzmittel in Polyurethanschaumstoffen bekannt. Als gravierender Nachteil ist aber die Tatsache zu sehen, dass Triphenylphosphat einen Schmelzpunkt von 49 °C aufweist und daher bei einer Verarbeitungstemperatur von etwa 20 °C die oben beschriebenen Probleme der Verwendung fester Flammschutzmittel mit sich bringt.

Alkylsubstituierte Arylphosphate, wie beispielsweise Diphenylkresylphosphat (EP-A 0 308 733), sind in der Regel flüssig und daher gut als Flammschutzmittel für Polyurethanschaumstoffe zu verarbeiten. In WO-A 2006119369 wird ein flüssiges Flammschutzmittel für Polyurethanschäume beschrieben, das aus einer Kombination von Triphenylphosphat, alkylierten Triphenylphosphaten und einem Polyolvernetzer besteht. EP-A 1 506 256 beschreibt Mischungen von alkylsubstituierten Triarylphosphaten mit Phosphor enthaltenden Flammschutzmitteln für Polyurethanschaumstoffe. Flammgeschützte Polyurethanschäume mit niedrigem Scorch, die alkylierte Phenylphosphate mit variierenden Phosphitanteilen enthalten, werden in WO 2006060573 A1 beschrieben.

Alkylsubstituierte Arylphosphate enthalten im Vergleich zu Triphenylphosphat weniger Phosphor. Der niedrigere Phosphorgehalt führt zu einer geringeren Flammschutzwirkung.

Es ist Aufgabe der vorliegenden Erfindung, halogenfreie flammgeschützte Polyurethanschaumstoffe zur Verfügung zu stellen, die sich durch niedrige Foggingwerte und gleichzeitig wenig Scorch auszeichnen. Die dafür erforderlichen Flammschutzmittel sollen gut verfügbar sein, einfach zu verarbeitende Flüssigkeiten darstellen und eine hohe Wirksamkeit bei geringer Aufwandsmenge ermöglichen.

Diese Aufgabe wird gelöst durch flammgeschützte Polyurethanschaumstoffe, die als Flammschutzmittel ein Gemisch aus
a) wenigstens einem halogenfreien Polyarylphosphat der allgemeinen Formel (I) 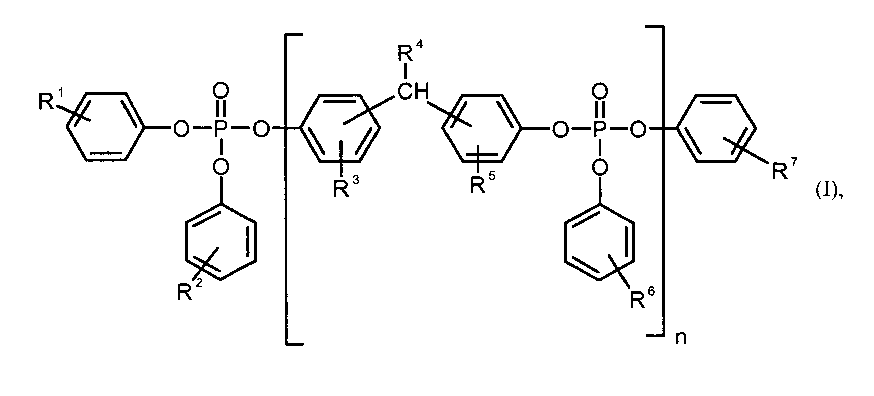 und
b) wenigstens einem halogenfreien Monoarylphosphat der allgemeinen Formel (II) 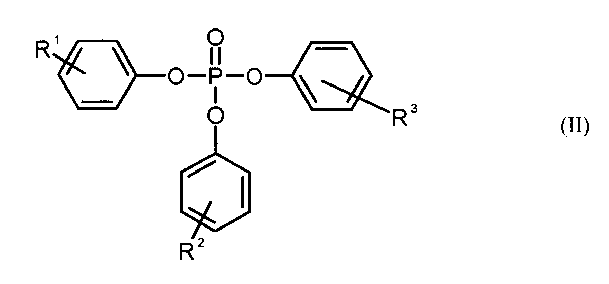 enthalten, worin
   - R¹, R², R³, R⁵, R⁶ und R⁷: jeweils unabhängig voneinander für H oder einen gerad- kettigen, verzweigten oder cyclischen C₁- bis C₄-Alkylrest oder Phenyl stehen,
   - R⁴: für H oder einen geradkettigen, verzweigten oder cyclischen C₁- bis C₁₀-Kohlenwasserstoffrest steht und
   - n: für eine Zahl von 1 bis 20 steht.

Der Begriff "halogenfrei" bedeutet, dass die Polyarylphosphate und Monoarylphosphate die Elemente Fluor, Chlor, Brom und/oder Iod nicht in einem Massenanteil größer als 0,1 % enthalten.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

Die Reste R¹, R², R³, R⁵, R⁶ und R⁷ sowie der verbrückende Alkylidenrest R⁴-CH: können gemäß den Formeln (I) und (II) unabhängig voneinander am Sechsring relativ zur C-O-Bindung in ortho-, meta- und/oder para-Position stehen.

Bevorzugt stehen R¹, R², R³, R⁵, R⁶ und R⁷ unabhängig voneinander für H oder Methyl, besonders bevorzugt stehen R¹, R², R³, R⁵, R⁶ und R⁷ für H.

Bevorzugt steht R⁴ für H, Methyl oder Phenyl, besonders bevorzugt steht R⁴ für H.

Vorzugsweise handelt es sich bei den Polyarylphosphaten der Formel (I) um Mischungen aus mehreren, strukturell ähnlichen Komponenten, die sich zum Beispiel in der Zahl n, den Resten R¹, R², R³, R⁴, R⁵, R⁶ und R⁷ und/oder den Substitutionsorten dieser Reste, also ortho, meta oder para, unterscheiden. In solchen Mischungen können neben den linearen Polyarylphosphaten der Formel (I) auch weitere verzweigte, sternförmige, cyclische oder andersartig vernetzte Polyarylphosphate enthalten sein.

Die flammgeschützten und gegen Scorch geschützten Polyurethanschaumstoffe enthalten, bezogen auf den gesamten Polyurethanschaumstoff, bevorzugt
a) 0,1 - 20 Gew.-% Polyarylphosphate der Formel (I) und
b) 0,1 - 20 Gew.-% Monoarylphosphate der Formel (II).

In einer besonders bevorzugten Form der Erfindung enthalten die Polyurethanschaumstoffe
a) 0,5 - 16 Gew.-% Polyarylphosphate der Formel (I) und
b) 0,5 - 16 Gew.-% Monoarylphosphate der Formel (II).

Bevorzugt ist die Mischung aus Polyarylphosphaten und Monoarylphosphaten bei der Verarbeitungstemperatur eine Flüssigkeit. Unter der Verarbeitungstemperatur wird hierbei die Temperatur verstanden, bei der die Polyurethanrohstoffe den Dosier- und Mischaggregaten der Verschäumanlagen zugeführt werden. In der Regel werden hier in Abhängigkeit der Viskositäten der Komponenten und Auslegung der Dosieraggregate Temperaturen zwischen 20 und 80 °C gewählt. Vorzugsweise hat die flüssige Mischung aus Polyarylphosphaten und Monoarylphosphaten bei 20 °C eine Viskosität zwischen 10 mPas und 5000 mPas, bevorzugt zwischen 50 mPas und 2000 mPas.

Die in den erfindungsgemäßen Polyurethanschaumstoffen enthaltenen Polyarylphosphate und Monoarylphosphate sind dem Fachmann bekannt und gut verfügbar. Besonders vorteilhaft können sie beispielsweise in Form einer Mischung erhalten werden, wenn Monoarylphosphate der Formel (II) unter Wasserentzug mit substöchiometrischen Mengen an Aldehyden R⁴-CHO, wobei R⁴ die oben genannte Bedeutung hat, oder deren Derivaten umgesetzt werden. Dies ist zum Beispiel in EP 0 001 215 A1 beschrieben.

Die erfindungsgemäßen, flammgeschützten Polyurethanschaumstoffe werden vorzugsweise hergestellt, indem man organische Polyisocyanate mit Verbindungen mit mindestens zwei gegenüber Isocyanaten reaktionsfähigen Wasserstoffatomen mit üblichen Treibmitteln, Stabilisatoren, Aktivatoren und/oder weiteren üblichen Hilfs- und Zusatzstoffen in Gegenwart von halogenfreien Polyarylphosphaten der Formel (I) und Monoarylphosphaten der Formel (II) umsetzt.

Bei den Polyurethanschaumstoffen handelt es sich um Schaumstoffe auf Isocyanatbasis, die vorwiegend Urethan- und/oder Isocyanurat- und/oder Allophanat- und/oder Uretdion- und/oder Harnstoff- und/oder Carbodiimidgruppen aufweisen. Die Herstellung von Schaumstoffen auf Isocyanatbasis ist bekannt und z. B. in DE-OS 16 94 142 (= GB 1 211 405), DE-OS 16 94 215 (= US 3,580,890) und DE-OS 17 20 768 (= US 3,620,986) sowie im Kunststoff-Handbuch Band VII, Polyurethane, herausgegeben von G. Oertel, Carl Hanser Verlag München, Wien 1993, beschrieben.

Polyurethanschaumstoffe werden grob in weiche und harte Schaumstoffe unterschieden. Zwar können Weich- und Hartschaumstoffe grundsätzlich in etwa die gleiche Raumdichte und Zusammensetzung aufweisen, jedoch sind die Polyurethanweichschäume nur gering vernetzt und weisen bei Druckbelastung nur einen geringen Verformungswiderstand auf. Im Gegensatz dazu besteht die Struktur der Polyurethanhartschäume aus hoch vernetzten Einheiten und der Polyurethanhartschaum zeigt bei Druckbelastung einen sehr hohen Verformungswiderstand. Der typische Polyurethanhartschaum ist geschlossenzellig und weist nur eine niedrige Wärmeleitzahl auf. Primär wird bei der Herstellung von Polyurethanen, die über die Reaktion von Polyolen mit Isocyanaten abläuft, über die Struktur und Molmasse des Polyols sowie über die Reaktivität und Anzahl (Funktionalität) der im Polyol enthaltenen Hydroxylgruppen die spätere Schaumstrukur und seine Eigenschaften beeinflusst. Weitere Einzelheiten zu Hart- und Weichschaumstoffen, den zu ihrer Herstellung einsetzbaren Ausgangsstoffen sowie zu Verfahren zu ihrer Herstellung finden sich in Norbert Adam, Geza Avar, Herbert Blankenheim, Wolfgang Friederichs, Manfred Giersig, Eckehard Weigand, Michael Halfmann, Friedrich-Wilhelm Wittbecker, Donald-Richard Larimer, Udo Maier, Sven Meyer-Ahrens, Karl-Ludwig Noble und Hans-Georg Wussow: "Polyurethanes", Ullmann's Encyclopedia of Industrial Chemistry Release 2005, Electronic Release, 7th ed., chap. 7 ("Foams"), Wiley-VCH, Weinheim 2005.

Bevorzugt weisen die erfindungsgemäßen Polyurethanschaumstoffe Raumgewichte von 10 - 130 kg/m³ auf. Besonders bevorzugt weisen sie Raumgewichte von 15 - 40 kg/m³ auf.

Für die Herstellung der erfindungsgemäß zu schützenden Schaumstoffe auf Isocyanatbasis werden folgende Ausgangskomponenten eingesetzt:
1. Aliphatische, cycloaliphatische, araliphatische, aromatische und heterocyclische Polyisocyanate (z. B. W. Siefken in Justus Liebigs Annalen der Chemie, 562, S. 75-136), bevorzugt solche der Formel Q(NCO)n, in der n = 2 bis 4, vorzugsweise 2 bis 3, und Q einen aliphatischen Kohlenwasserstoffrest mit 2 bis 18, vorzugsweise 6 bis 10 C- Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten. Besonders bevorzugt werden in der Regel die technisch leicht zugänglichen Polyisocyanate, die sich vom 2,4- und/oder 2,6-Toluylendiisocyanat bzw. von 4,4'- und/oder 2,4'-Diphenylmethandiisocyanat ableiten.
2. Verbindungen mit mindestens zwei gegenüber Isocyanaten reaktionsfähigen Wasserstoffatomen mit einem Molekulargewicht von 400 bis 8.000 g/mol ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen. Soll der Polyurethanschaum ein Weichschaum sein, so werden bevorzugt Polyole mit Molmassen von 2.000 bis 8.000 g/mol und 2 bis 6 Hydroxylgruppen pro Molekül eingesetzt. Soll hingegen ein Hartschaum hergestellt werden, so werden bevorzugt hochverzweigte Polyole mit Molmassen von 400 bis 1.000 g/mol und 2 bis 8 Hydroxylgruppen pro Molekül eingesetzt. Bei den Polyolen handelt es sich um Polyether und Polyester sowie Polycarbonate und Polyesteramide, wie sie für die Herstellung von homogenen und von zellförmigen Polyurethanen an sich bekannt sind und wie sie etwa in der DE-OS 28 32 253 (= US 4,263,408) und in EP 1 555 275 A2 (= US 2005 159 500) beschrieben werden. Die mindestens zwei Hydroxylgruppen aufweisenden Polyether und Polyester sind erfindungsgemäss bevorzugt.

Die erfindungsgemäßen Polyurethanschaumstoffe lassen sich also durch entsprechende, leicht dem Stand der Technik zu entnehmende Wahl der Ausgangsstoffe als Hart- oder Weichschaumstoffe herstellen.

In einer bevorzugten Ausführungsform sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hiefür werden ebenfalls in der DE-OS 28 32 253 (= US 4,263,408) beschrieben.
3. Wasser und/oder leicht flüchtige Substanzen als Treibmittel, z. B. n-Pentan, i-Pentan, Cyclopentan, halogenhaltige Alkane, wie Trichlonnethan, Methylenchlorid oder Chlorfluoralkane, Gase, wie CO₂ und andere. Auch eine Mischung mehrerer Treibmittel kann verwendet werden.
4. In einer weiteren bevorzugten Ausführungsform werden Hilfs- und Zusatzmittel mitverwendet, wie Katalysatoren der an sich bekannten Art, oberflächenaktive Zusatzstoffe, wie Emulgatoren und Schaumstabilisatoren, Reaktionsverzögerer, z. B. sauer reagierende Stoffe wie Salzsäure oder organische Säurehalogenide, ferner Zellregler der an sich bekannten Art, wie Paraffine oder Fettalkohole und Dimethylpolysiloxane sowie Pigmente oder Farbstoffe und weitere Flammschutzmittel, ferner Stabilisatoren gegen Alterungs- und Witterungseinflüsse, Kernverfärbungsinhibitoren, Weichmacher und fungistatisch und bakteriostatisch wirkende Substanzen sowie Füllstoffe, wie Bariumsulfat, Kieselgur, Ruß oder Schlämmkreide (DE-OS 27 32 292 = US 4,248,930). Als Kernverfärbungsinhibitoren können insbesondere sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole enthalten sein.

In einer besonders bevorzugten Ausführungsform können als weitere Flammschutzmittel neben dem Gemisch aus Polyarylphosphaten und Monoarylphosphaten in den Polyurethanschaumstoffen
a) organische Phosphorverbindungen, insbesondere Triethylphosphat, aliphatische Bisphosphate, Neopentylglycol-bis(diphenylphosphat), chlorhaltige Phosphorsäureester wie z. B. Tris(chlorpropyl)phosphat oder Tris(dichlorpropyl)phosphat, Dimethylmethanphosphonat, Diethylethanphosphonat, Dimethylpropanphosphonat, oligomere Phosphate oder Phosphonate, Hydroxylgruppen-haltige Phosphorverbindungen, 5,5-Dimethyl-1,3,2-dioxaphosphorinan-2-oxid-Derivate,
b) salzartige Phosphorverbindungen, insbesondere Ammoniumphosphat, Ammoniumpolyphosphat, Melaminphosphat, Melaminpolyphosphat, Metallsalze von Dialkylphosphinsäuren, Metallsalze von Alkanphosphonsäuren,
c) Stickstoffverbindungen, insbesondere Melamin, Melamincyanurat,
d) Chlor- und Bromverbindungen, insbesondere Alkylester einer Tetrabrombenzoesäure, bromhaltige Diole hergestellt aus Tetrabromphthalsäureanhydrid, brom- und/oder chlorhaltige Polyole,
e) anorganische Flammschutzmittel, insbesondere Aluminiumhydroxid, Boehmit, Magnesiumhydroxid, Blähgraphit oder Tonmineralien
   enthalten sein.

Weitere Beispiele von gegebenenfalls erfindungsgemäss mitzuverwendenden oberflächenaktiven Zusatzstoffen und Schaumstabilisatoren sowie Zellreglern, Reaktionsverzögerern, Stabiliatoren, flammhemmenden Substanzen, Weichmachern, Farbstoffen und Füllstoffen sowie fungistatisch oder bakteriostatisch wirksamen Substanzen sowie Einzelheiten über Verwendungs- und Wirkungsweise dieser Zusatzmittel sind im Kunststoff-Handbuch, Band VII, Carl Hanser Verlag, München, 1993, auf den Seiten 104 bis 123 beschrieben.

Die vorliegende Erfindung umfasst auch ein Verfahren zur Herstellung von flammgeschützten Polyurethanschaumstoffen durch Umsetzung von organischen Polyisocyanaten mit Verbindungen mit mindestens zwei gegenüber Isocyanaten reaktionsfähigen Wasserstoffatomen und optional Treibmitteln, Stabilisatoren, Aktivatoren und weiteren Hilfs- und Zusatzstoffen bei 20 bis 80 °C, **dadurch gekennzeichnet, dass** als Flammschutzmittel ein Gemisch aus
a) 0,1 bis 40 Teilen, bevorzugt 1 bis 30 Teilen bezogen auf 100 Teile Polyolkomponente, wenigstens einem halogenfreien Polyarylphosphat der allgemeinen Formel (I) 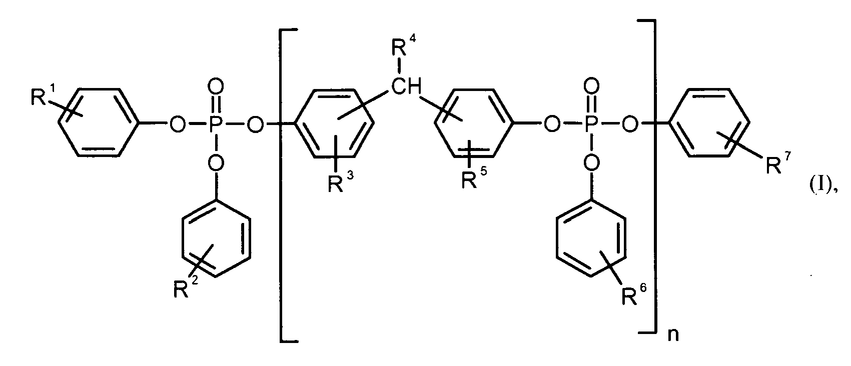 und
b) 0,1 bis 40 Teilen, bevorzugt 1 bis 30 Teilen bezogen auf 100 Teile Polyolkomponente, wenigstens einem halogenfreien Monoarylphosphat der allgemeinen Formel (II) 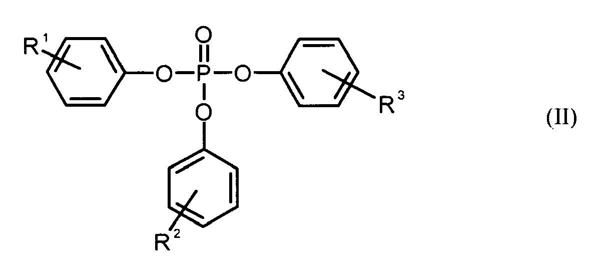 eingesetzt wird, worin
   - R¹, R², R³, R⁵, R⁶ und R⁷: jeweils unabhängig voneinander für H oder einen gerad- kettigen, verzweigten oder cyclischen C₁- bis C₄-Alkylrest oder Phenyl stehen,
   - R⁴: für H oder einen geradkettigen, verzweigten oder cyclischen C₁- bis C₁₀-Kohlenwasserstoffrest steht und
   - n: für eine Zahl von 1 bis 20 steht.

In einer bevorzugten Ausführungsform des Verfahrens werden Polyarylphosphate und Monoarylphosphate eingesetzt, bei denen gemäß den Formeln (I) und (II) die Reste R¹, R², R³, R⁵, R⁶ und R⁷ unabhängig voneinander für H oder Methyl stehen. Besonders bevorzugt stehen die Reste R¹, R², R³, R⁵, R⁶ und R⁷ für H.

In einer weiteren bevorzugten Ausführungsform des Verfahrens werden Polyarylphosphate eingesetzt, bei denen gemäß der Formel (I) der Rest R⁴ für H, Methyl oder Phenyl steht. Besonders bevorzugt steht der Rest R⁴ für H.

Bevorzugt handelt es sich bei den Polyarylphosphaten um Mischungen aus mehreren, strukturell ähnlichen Komponenten, die sich zum Beispiel in der Zahl n, den Resten R¹, R², R³, R⁴, R⁵, R⁶ und R⁷ und/oder den Substitutionsorten dieser Reste, also ortho, meta oder para, unterscheiden.

Durchführung des Verfahrens zur Herstellung von Polyurethanschaumstoffen:
Die oben beschriebenen Reaktionskomponenten werden vorzugsweise nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US 2,764,565 beschrieben werden. Einzelheiten über Verarbeitungseinrichtungen, die auch erfindungsgemäss in Frage kommen, werden beispielsweise im Kunststoff-Handbuch Band VII, Polyurethane, herausgegeben von G. Oertel, Carl Hanser Verlag München, Wien 1993, auf den Seiten 139 bis 192 beschrieben.

Erfindungsgemäß lassen sich auch kalthärtende Schaumstoffe herstellen (GB-PS 11 62 517, DE-OS 21 53 086). Selbstverständlich können aber auch Schaumstoffe durch Blockverschäumung oder nach dem an sich bekannten Doppeltransportbandverfahren hergestellt werden. Polyisocyanuratschaumstoffe werden nach den hierfür bekannten Verfahren und Bedingungen hergestellt.

Das erfindungsgemäße Verfahren erlaubt die Herstellung von flammgeschützten Polyurethanschaumstoffen als Hart- oder Weichschäume in kontinuierlicher oder diskontinuierlicher Herstellungsweise oder als geschäumte Formartikel. Bevorzugt ist das erfindungsgemäße Verfahren bei der Herstellung von Weichschaumstoffen, die durch ein Blockverschäumungsverfahren hergestellt werden.

Die nach der Erfindung erhältlichen Produkte finden z. B. folgende Anwendung: Möbelpolsterungen, Textileinlagen, Matratzen, Sitze, bevorzugt Flugzeugsitze oder Automobilsitze, Armlehnen und Bauelemente sowie Sitz- und Armaturverkleidungen.

Die vorliegende Erfindung betrifft aber auch die Verwendung eines Gemisches aus
a) wenigstens einem halogenfreien Polyarylphosphat der allgemeinen Formel (I) 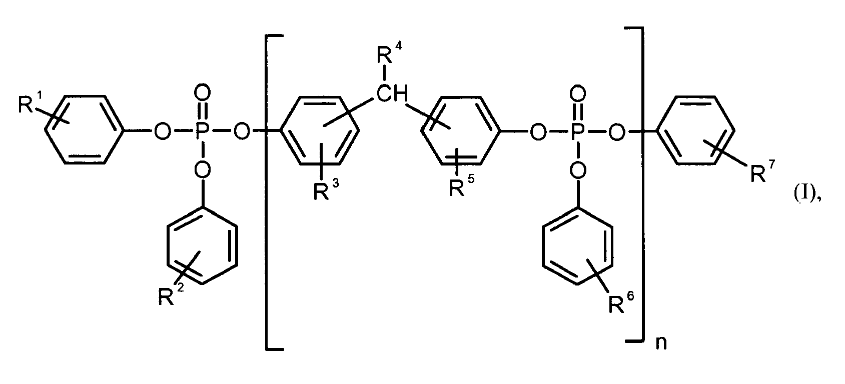 und
b) wenigstens einem halogenfreien Monoarylphosphat der allgemeinen Formel (II) 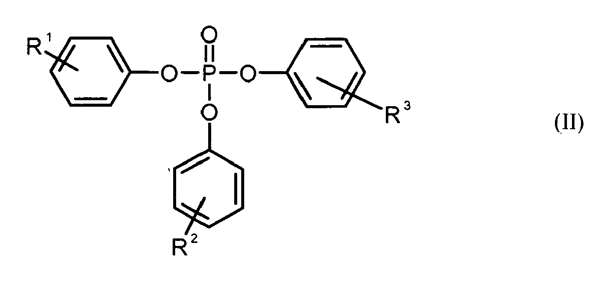 worin
   - R¹, R², R³, R⁵, R⁶ und R⁷: jeweils unabhängig voneinander für H oder einen gerad- kettigen, verzweigten oder cyclischen C₁- bis C₄-Alkylrest oder Phenyl stehen,
   - R⁴: für H oder einen geradkettigen, verzweigten oder cyclischen C₁- bis C₁₀-Kohlenwasserstoffrest steht und
   - n: für eine Zahl von 1 bis 20 steht,
   zur Vermeidung des Scorch und des Fogging in bzw. aus halogenfreien, flammgeschützten Polyurethanschaumstoffen.

Die vorliegende Erfindung betrifft schließlich auch ein Verfahren zur Vermeidung von Fogging oder Scorch aus bzw. in flammgeschützten Polyurethanschaumstoffen, **dadurch gekennzeichnet, dass** als Flammschutzmittel ein Gemisch aus
a) wenigstens einem halogenfreien Polyarylphosphat der allgemeinen Formel (I) 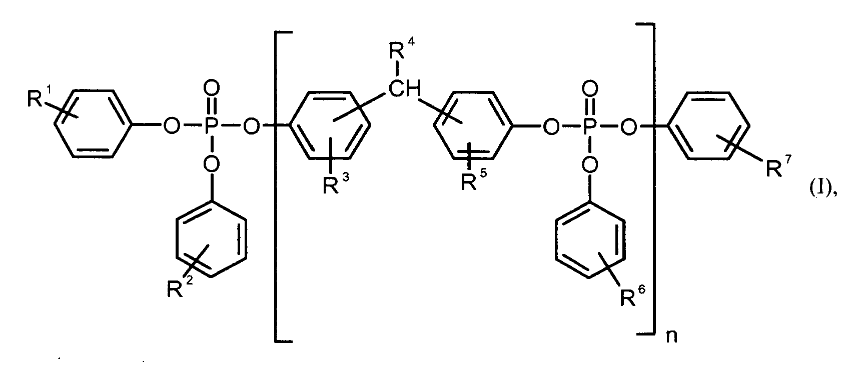 und
b) wenigstens einem halogenfreien Monoarylphosphat der allgemeinen Formel (II) 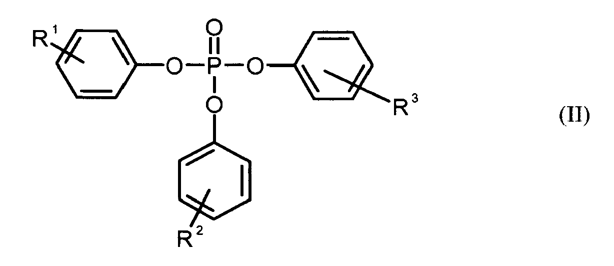 eingesetzt wird, worin
   - R¹, R², R³, R⁵, R⁶ und R⁷: jeweils unabhängig voneinander für H oder einen gerad- kettigen, verzweigten oder cyclischen C₁- bis C₄-Alkylrest oder Phenyl stehen,
   - R⁴: für H oder einen geradkettigen, verzweigten oder cyclischen C₁- bis C₁₀-Kohlenwasserstoffrest steht und
   - n: für eine Zahl von 1 bis 20 steht,
   eingesetzt wird.

Anhand der nachfolgenden Beispiele wird die Erfindung näher erläutert, ohne dass dadurch eine Einschränkung der Erfindung bewirkt werden soll.

### Beispiele

Die angegebenen Teile beziehen sich auf das Gewicht.

**Tabelle 1: Verwendete Materialien.**

| Komponente | Funktion | Beschreibung |
|---|---|---|
| A | Polyol | Arcol^{®} 1105 (Bayer MaterialScience AG), |
| | | Polyetherpolyol mit OHZ 56 mg KOH/g |
| B | Treibmittel | Wasser |
| C | Katalysator | Niax^{®} A-1 (GE Silicones), 70 %ige Lösung von |
| | | Bis(2-dimethylaminoethyl)ether in Dipropylenglykol |
| D | Katalysator | Desmorapid^{®} SO (Rheinchemie), Zinn-(II)-2-ethylhexanoat |
| E | Stabilisator | Tegostab^{®} B 8232 (Degussa), Siliconstabilisator |
| F1 | Flammschutzmittel | Tris(dichlorisopropyl)phosphat, TDCP, |
| | | CAS Reg.-No. 13674-87-8 |
| F2 | Flammschutzmittel | Diphenylkresylphosphat, CAS Reg.-No. 26444-49-5 |
| F3 | Flammschutzmittel | Bisphenol-A-bis-(diphenylphosphat), |
| | | CAS Reg.-No. 181028-79-5 |
| F4 | Flammschutzmittel | Reaktionsprodukt aus der Umsetzung von Triphenylphosphat mit |
| | | Paraformaldehyd nach EP 0 001 215 A1 |
| | | Viskosität 311 mPas bei 20 °C |
| | | Triphenylphosphatgehalt laut GC: 54 Gew.-%. |
| F5 | Flammschutzmittel | Reaktionsprodukt aus der Umsetzung von Triphenylphosphat mit |
| | | Paraformaldehyd nach EP 0 001 215 A1 |
| | | Viskosität 292 mPas bei 20 °C |
| | | Triphenylphosphatgehalt laut GC: 50 Gew.-%. |
| F6 | Flammschutzmittel | Reaktionsprodukt aus der Umsetzung von Triphenylphosphat mit |
| | | Paraformaldehyd nach EP 0 001 215 A1 |
| | | Viskosität 290 mPas bei 20 °C |
| | | Triphenylphosphatgehalt laut GC: 49 Gew.-%. |
| F7 | Flammschutzmittel | Reaktionsprodukt aus der Umsetzung von Triphenylphosphat mit |
| | | Paraformaldehyd nach EP 0 001 215 A1 |
| | | Viskosität 285 mPas bei 20 °C |
| | | Triphenylphosphatgehalt laut GC: 49 Gew.-%. |
| G | Diisocyanat | Desmodur^{®} T 80 (Bayer MaterialScience AG), |
| | | Toluylendiisocyanat, Isomerenmischung |

### Herstellung von Polyurethanweichschaumstoffen

Die in Tabelle 1 spezifizierten Komponenten mit Ausnahme des Diisocyanats (Komponente G) wurden je nach Schaumtyp in den in Tabelle 2 angegebenen Massenverhältnissen zu einer homogenen Mischung verrührt. Dann wurde das Diisocyanat zugefügt und kurz intensiv untergerührt. Nach einer Startzeit von 15 bis 20 s und einer Steigzeit von 190 bis 210 s wurden Polyurethanweichschaumstoffe mit einem Raumgewicht je nach Rezeptur von 26 bzw. 33 kg/m³ erhalten.

### Bestimmung der Flammschutzwirkung

Die Polyurethanweichschaumstoffe wurden nach den Vorgaben des Federal Motor Vehicle Safety Standards FMVSS-302 getestet. Dabei wurden in einer horizontalen Halterung befestigte Schaumstoff-Probenkörper der Maße 210 mm x 95 mm x 15 mm (L x B x H) mittig an der kurzen Kante für 15 s mit einer 40 mm hohen Gasbrennerflamme entzündet und nach Entfernung der Zündflamme die Flammenausbreitung beobachtet. Je nachdem, ob und wie weit der Probenkörper weiterbrannte, wurde er den Brandklassen SE (selbstverlöschend, weniger als 38 mm der Probe angebrannt), SE/NBR (selbstverlöschend innerhalb von 60 s/keine Angabe der Brennrate), SE/B (selbstverlöschend/Brennrate messbar), BR (brennt bis zum Probenende, Brennrate messbar) und RB (schnell brennend, Brennrate nicht messbar) zugeordnet. Die Brandversuche wurden für jedes Beispiel fünfmal durchgeführt. Tabelle 2 gibt das schlechteste Ergebnis jeder Fünferreihe wieder.

### Bestimmung des Foggings

Das Foggingverhalten der Polyurethanweichschaumstoffe wurde gemäß DIN 75201 B untersucht. Dabei wurden zylindrische Schaumstoff-Probenkörper der Maße 80 mm x 10 mm (∅ x H) für 16 h auf 100 °C erhitzt und die während dieser Zeit an einer auf 21 °C gekühlten, oberhalb der Probenkörper positionierten Aluminiumfolie niedergeschlagenen Kondensatmengen ausgewogen. Die gemessenen Kondensatmengen sind in Tabelle 2 wiedergegeben.

### Bestimmung Scorch

Die Komponenten wurden gemischt und dann in eine 20 x 20 x 14 cm Papierform gegossen. 5 min nach Beendigung des Schäumvorganges (die Temperatur im Kern des Schaumes erreicht ca. 135 °C) wurde der Schaum in einem Mikrowellenofen (Mars 5, CEM) für 4 min bei 300 W bestrahlt. Dann wurde der Schaum herausgenommen (Temperatur im Schaum ca. 160 °C) und über Nacht abgekühlt. Anschließend wurde der Schaum halbiert und auf Scorch untersucht. Hierzu wurde der Schaum mittels eines Colorimeters (CR-400/410, Konica Minolta) analysiert. Das Colorimeter bestimmte die drei Farbcharakteristiken Helligkeit (L), Rot- und Grünton (a) sowie Gelb- und Blauton (b) des untersuchten Schaumes. Im Vergleich mit einem scorchfreien Refernzschaum wurden die Differenzen dL, da und db ermittlet. Aus diesen Daten wurde dann die Änderung der Farbe (dE) des untersuchten Schaumes gegenüber dem Refemzschaum berechnet: dE = (dL² + da² + db²)^{0.5}.

**Tabelle 2: Zusammensetzung (Teile) und Prüfergebnisse der erfindungsgemäßen Beispiele B1 und B2 und der nicht erfindungsgemäßen Vergleichsbeispiele V1 bis V4.**

| **Beispiel** | **V1** | **V2** | **V3** | **V4** | **B1** | **B2** |
|---|---|---|---|---|---|---|
| A | 10 | 10 | 10 | 10 | 10 | 10 |
| B | 3,0 | 3,0 | 3,0 | 3,0 | 3,0 | 3,0 |
| C | 0,1 | 0,1 | 0,1 | 0,1 | 0,1 | 0,1 |
| D | 0,1 | 0,1 | 0,1 | 0,1 | 0,1 | 0,1 |
| E | 0,8 | 0,8 | 0,8 | 0,8 | 0,8 | 0,8 |
| F1 | | 6 | | | | |
| F2 | | | 6 | | | |
| F3 | | | | 6 | | |
| F4 | | | | | 6 | |
| F5 | | | | | | 6 |
| G | 40,9 | 40,9 | 40,9 | 40,9 | 40,9 | 40,9 |
| Raumgewicht | 33 | 33 | 33 | 33 | 33 | 33 |
| MVSS-Klasse | R | SE | B | R | B | B |
| Fogging-[mg] | 0,2 | 0,7 | 0,8 | 0,2 | 0,3 | 0,4 |

### Ergebnisse

In Abwesenheit eines Flammschutzmittels (Vergleichsbeispiel V1, Tabelle 2) brannte der Polyurethanweichschaumstoff rasch ab (FMVSS-Brandklasse RB), zeigte aber einen sehr niedrigen Foggingwert. Ein Schaumstoff mit Tris(dichlorisopropyl)phosphat (Vergleichsbeispiel V2) konnte den von der Automobilindustrie geforderten Foggingwert von maximal 1 mg Kondensat einhalten und die beste FMVSS-Brandklasse SE (selbsterlöschend) in allen Wiederholungen des Brandversuchs erreichen. Tris(dichlorisopropyl)phosphat brachte aber die oben beschriebenen Nachteile eines halogenhaltigen Flammschutzmittels mit. Mit der Verwendung des halogenfreien Flammschutzmittels Diphenylkresylphosphat (Vergleichsbeispiel V3) wurde dieses Problem zwar umgangen und der FMVSS-Test mit einer niedrigen Klasse bestanden, allerdings war der Foggingwert hoch. Der Einsatz von Bisphenol-A-bis-(diphenylphosphat) (Vergleichsbeispiel V 4) ergab einen geringen Foggingwert, allerdings war das Brandverhalten mit der Klassifizierung RB unzureichend.

Die Beispiele B1 und B2 zeigten, dass sich die erfindungsgemäßen, halogenfreien Polyurethanweichschaumstoffe durch eine ausreichende Brandklasse BR in allen Wiederholungen des Brandversuchs und durch einen sehr niedrigen Foggingwert auszeichnen.

**Tabelle 3: Zusammensetzung (Teile) und Prüfergebnisse der erfindungsgemäßen Beispiele B3 bis B4 und der nicht erfindungsgemäßen Vergleichbeispiele V 5 bis V8.**

| **Beispiel** | **V5** | **V6** | **V7** | **V8** | **B3** | **B4** |
|---|---|---|---|---|---|---|
| A | 100 | 100 | 100 | 100 | 100 | 100 |
| B | 4,5 | 4,5 | 4,5 | 4,5 | 4,5 | 4,5 |
| C | 0,1 | 0,1 | 0,1 | 0,1 | 0,1 | 0,1 |
| D | 0,2 | 0,2 | 0,2 | 0,2 | 0,2 | 0,2 |
| E | 0,8 | 0,8 | 0,8 | 0,8 | 0,8 | 0,8 |
| F1 | | 18 | | | | |
| F2 | | | 18 | | | |
| F3 | | | | 18 | | |
| F6 | | | | | 18 | |
| F7 | | | | | | 18 |
| G | 57,3 | 57,3 | 57,3 | 57,3 | 57,3 | 57,3 |
| Raumgewicht | 26 | 26 | 26 | 26 | 26 | 26 |
| Scorch [dE] | 3,9 | 18, | 7,7 | 7,2 | 5,9 | 9,1 |

In Abwesenheit eines Flammschutzmittels wies der Polyurethanschaum (V5, Tabelle 3) nur einen niedrigen dE-Wert, d.h. einen geringen Scorch auf. Bei Zugabe von Tris(dichlorisopropyl)phosphat (V6) ergab sich ein Schaum mit einem hohem dE-Wert, d.h. einem starken Scorch. Bei der Verwendung des halogenfreien Flammschutzmittel Diphenylkresylphosphat (V7) und Bisphenol-A-bis-(diphenylphosphat) (V 8) zeigte der Schaum nur einen geringen Scorch.

Die Beispiele B3 und B4 zeigten, dass die erfindungsgemäßen, halogenfreien Polyurethanweichschaumstoffe sich durch einen niedrigen Scorch auszeichnen.

## Patentansprüche

1. Flammgeschützte Polyurethanschaumstoffe, die als Flammschutzmittel ein Gemisch aus
a) wenigstens einem halogenfreien Polyarylphosphat der allgemeinen Formel (I) 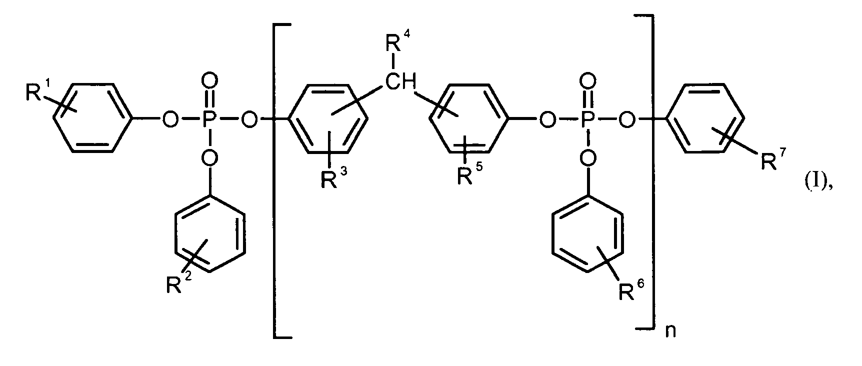 und
b) wenigstens einem halogenfreien Monoarylphosphat der allgemeinen Formel (II) 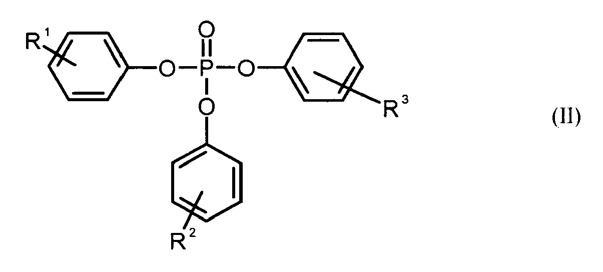 enthalten, worin
R¹, R², R³, R⁵, R⁶ und R⁷ jeweils unabhängig voneinander für H oder einen gerad- kettigen, verzweigten oder cyclischen C₁- bis C₄-Alkylrest oder Phenyl stehen,
R⁴ für H oder einen geradkettigen, verzweigten oder cyclischen C₁- bis C₁₀-Kohlenwasserstoffrest steht und
n für eine Zahl von 1 bis 20 steht.

2. Flammgeschützte Polyurethanschaumstoffe gemäß Anspruch 1, **dadurch gekennzeichnet, dass** R¹, R², R³, R⁵, R⁶ und R⁷ unabhängig voneinander für H oder Methyl stehen.

3. Flammgeschützte Polyurethanschaumstoffe gemäß den Ansprüchen 1 oder 2, **dadurch gekennzeichnet, dass** R⁴ für H, Methyl oder Phenyl steht.

4. Flammgeschützte Polyurethanschaumstoffe nach mindestens einem der Ansprüche 1 bis 3, **dadurch gekennzeichnet, dass** sie 0,1 - 20 Gew.-% Polyarylphosphate der Formel (I) und 0,1 - 20 Gew.-% Monoarylphosphate der Formel (II) enthalten.

5. Flammgeschützte Polyurethanschaumstoffe nach mindestens einem der Ansprüche 1 bis 4, **dadurch gekennzeichnet, dass** sie 0,5 - 16 Gew.-% Polyarylphosphate der Formel (I) und 0,5 - 16 Gew.-% Monoarylphosphate der Formel (II) enthalten.

6. Flammgeschützte Polyurethanschaumstoffe nach mindestens einem der Ansprüche 1 bis 5, **dadurch gekennzeichnet, dass** es sich bei dem Gemisch aus Polyarylphosphat und Monoarylphosphat in dem Temperaturbereich zwischen 20 °C und 80 °C um eine Flüssigkeit handelt.

7. Flammgeschützte Polyurethanschaumstoffe nach Anspruch 6, **dadurch gekennzeichnet, dass** die Viskosität des Gemisches aus Polyarylphosphat und Monoarylphosphat bei 20 °C zwischen 10 mPas und 5000 mPas liegt.

8. Flammgeschützte Polyurethanschaumstoffe nach mindestens einem der Ansprüche 1 bis 7, **dadurch gekennzeichnet, dass** es sich dabei um Weichschaumstoffe handelt.

9. Flammgeschützte Polyurethanschaumstoffe nach mindestens einem der Ansprüche 1 bis 8, **dadurch gekennzeichnet, dass** sie weitere Flammschutzmittel enthalten.

10. Verfahren zur Herstellung von flammgeschützten Polyurethanschaumstoffen durch Umsetzung von organischen Polyisocyanaten mit Verbindungen mit mindestens zwei gegenüber Isocyanaten reaktionsfähigen Wasserstoffatomen und optional Treibmitteln, Stabilisatoren, Aktivatoren oder weiteren Hilfs- und Zusatzstoffen bei 20 bis 80 °C, **dadurch gekennzeichnet, dass** als Flammschutzmittel ein Gemisch aus
a) 0,1 bis 40 Teilen, bezogen auf 100 Teile Polyolkomponente, wenigstens eines halogenfreien Polyarylphosphats der allgemeinen Formel (I) 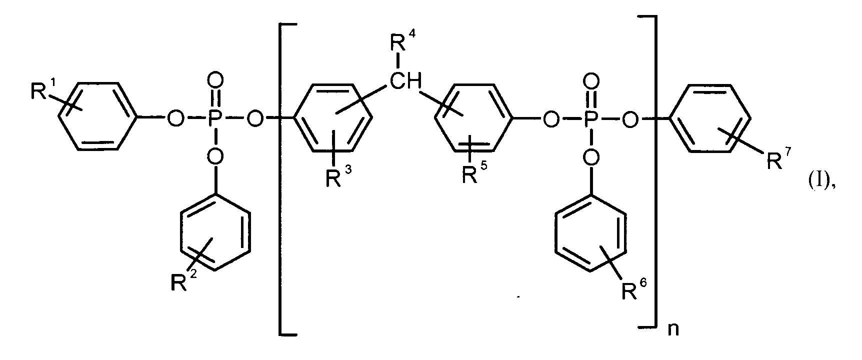 und
b) 0,1 bis 40 Teilen bezogen auf 100 Teile Polyolkomponente, wenigstens eines halogenfreien Monoarylphosphats der allgemeinen Formel (II) 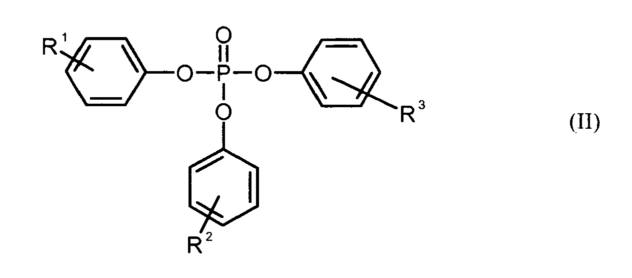 eingesetzt wird, worin
R¹, R², R³, R⁵, R⁶ und R⁷ jeweils unabhängig voneinander für H oder einen gerad- kettigen, verzweigten oder cyclischen C₁- bis C₄-Alkylrest oder Phenyl stehen,
R⁴ für H oder einen geradkettigen, verzweigten oder cyclischen C₁- bis C₁₀-Kohlenwasserstoffrest steht und
n für eine Zahl von 1 bis 20 steht.

11. Verwendung der Polyurethanschaumstoffe gemäß mindestens einem der Ansprüche 1 bis 9 in Möbelpolsterungen, Textileinlagen, Matratzen, Sitzen, Armlehnen, Bauelementen, sowie Sitz- und Armaturverkleidungen.

12. Verwendung eines Gemisches aus
a) wenigstens einem halogenfreien Polyarylphosphat der allgemeinen Formel (I) 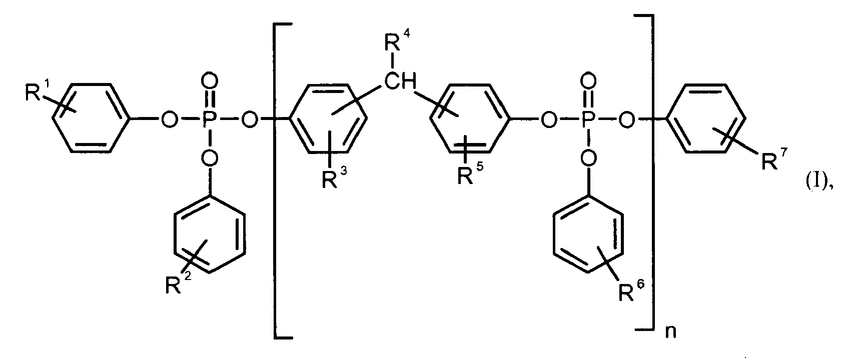 und
b) wenigstens einem halogenfreien Monoarylphosphat der allgemeinen Formel (II) 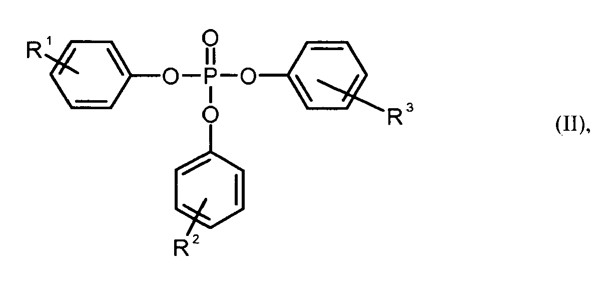 worin
R¹, R², R³, R⁵, R⁶ und R⁷ jeweils unabhängig voneinander für H oder einen gerad- kettigen, verzweigten oder cyclischen C₁- bis C₄-Alkylrest oder Phenyl stehen,
R⁴ für H oder einen geradkettigen, verzweigten oder cyclischen C₁- bis C₁₀-Kohlenwasserstoffrest steht und
n für eine Zahl von 1 bis 20 steht,
zur Vermeidung des Scorch und des Fogging in bzw. aus halogenfreien, flammgeschützten Polyurethanschaumstoffen.

13. Verfahren zur Vermeidung von Fogging und/oder Scorch aus bzw. in flammgeschützten Polyurethanschaumstoffen, **dadurch gekennzeichnet, dass** als Flammschutzmittel ein Gemisch aus
a) wenigstens einem halogenfreien Polyarylphosphat der allgemeinen Formel (I) 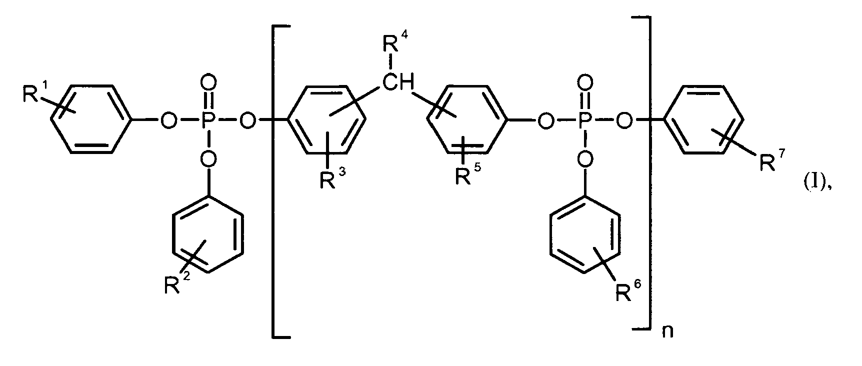 und
b) wenigstens einem halogenfreien Monoarylphosphat der allgemeinen Formel (II) 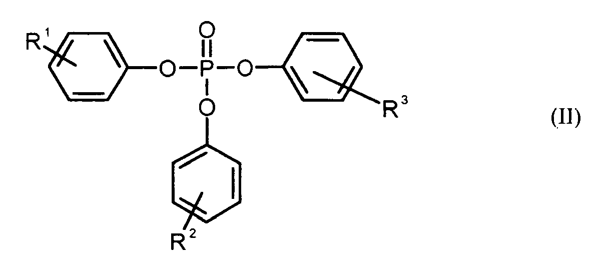 eingesetzt wird, worin
R¹, R², R³, R⁵, R⁶ und R⁷ jeweils unabhängig voneinander für H oder einen gerad- kettigen, verzweigten oder cyclischen C₁- bis C₄-Alkylrest oder Phenyl stehen,
R⁴ für H oder einen geradkettigen, verzweigten oder cyclischen C₁- bis C₁₀-Kohlenwasserstoffrest steht und
n für eine Zahl von 1 bis 20 steht.

## Claims

1. Flame-retardant polyurethane foams which comprise, as flame retardant, a mixture composed of
a) at least one halogen-free polyaryl phosphate of the general formula (I) 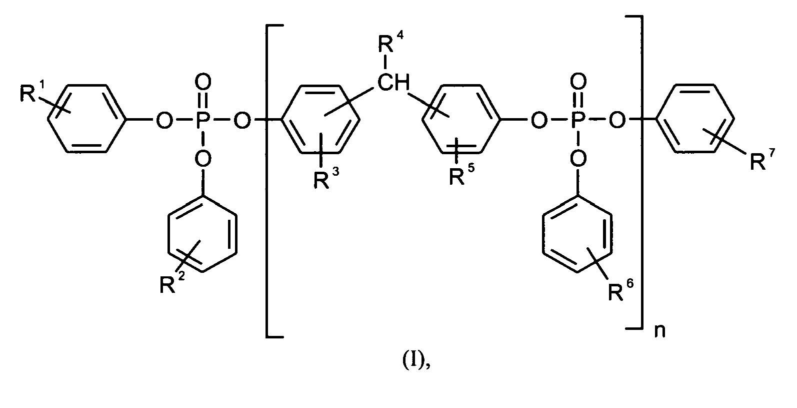 and
b) at least one halogen-free monoaryl phosphate of the general formula (II) 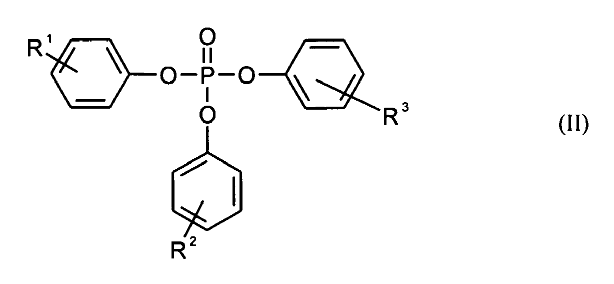 in which
R¹, R², R³, R⁵, R⁶ and R⁷ are in each case, independently of each other, H or a straight-chain, branched or cyclic C₁-C₄-alkyl moiety or phenyl,
R⁴ is H or a straight-chain, branched or cyclic C₁-C₁₀-hydrocarbon moiety and
n is a number from 1 to 20.

2. Flame-retardant polyurethane foams according to Claim 1, **characterized in that** R¹, R², R³, R⁵, R⁶ and R⁷, independently of each other, are H or methyl.

3. Flame-retardant polyurethane foams according to Claim 1 or 2, **characterized in that** R⁴ is H, methyl or phenyl.

4. Flame-retardant polyurethane foams according to at least one of Claims 1 to 3, **characterized in that** they comprise from 0.1 to 20% by weight of polyaryl phosphates of the formula (I) and from 0.1 to 20% by weight of monoaryl phosphates of the formula (II).

5. Flame-retardant polyurethane foams according to at least one of Claims 1 to 4, **characterized in that** they comprise from 0.5 to 16% by weight of polyaryl phosphates of the formula (I) and from 0.5 to 16% by weight of monoaryl phosphates of the formula (II).

6. Flame-retardant polyurethane foams according to at least one of Claims 1 to 5, **characterized in that** the mixture composed of polyaryl phosphate and monoaryl phosphate is a liquid in the temperature range from 20°C to 80°C.

7. Flame-retardant polyurethane foams according to Claim 6, **characterized in that** the viscosity of the mixture composed of polyaryl phosphate and monoaryl phosphate at 20°C is from 10 mPas to 5000 mPas.

8. Flame-retardant polyurethane foams according to at least one of Claims 1 to 7, **characterized in that** these are flexible foams.

9. Flame-retardant polyurethane foams according to at least one of Claims 1 to 8, **characterized in that** they comprise further flame retardants.

10. Method for the production of flame-retardant polyurethane foams via reaction of organic polyisocyanates with compounds having at least two hydrogen atoms reactive towards isocyanates, and optionally with blowing agents, stabilizers, activators or further auxiliaries and additives, at from 20 to 80°C, **characterized in that**, as flame retardant, a mixture is used composed of
a) from 0.1 to 40 parts, based on 100 parts of polyol component, of at least one halogen-free polyaryl phosphate of the general formula (I) 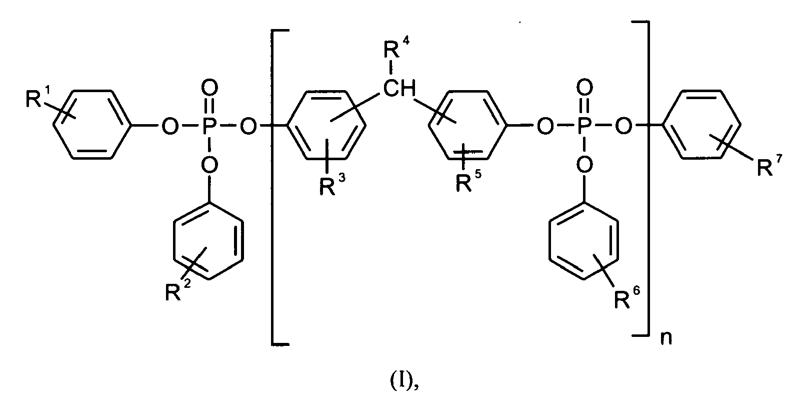 and
b) from 0.1 to 40 parts, based on 100 parts of polyol component, of at least one halogen-free monoaryl phosphate of the general formula (II) 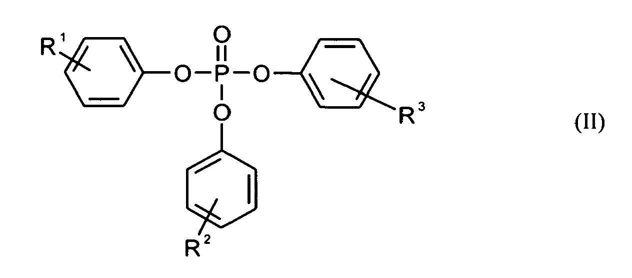 in which
R¹, R², R³, R⁵, R⁶ and R⁷ are in each case, independently of each other, H or a straight-chain, branched or cyclic C₁-C₄-alkyl moiety or phenyl,
R⁴ is H or a straight-chain, branched or cyclic C₁-C₁₀-hydrocarbon moiety and
n is a number from 1 to 20.

11. Use of the polyurethane foams according to at least one of Claims 1 to 9 in furniture padding, textile inserts, mattresses, seats, armrests, modules, and also seat coverings and cladding over technical equipment.

12. Use of a mixture composed of
a) at least one halogen-free polyaryl phosphate of the general formula (I) 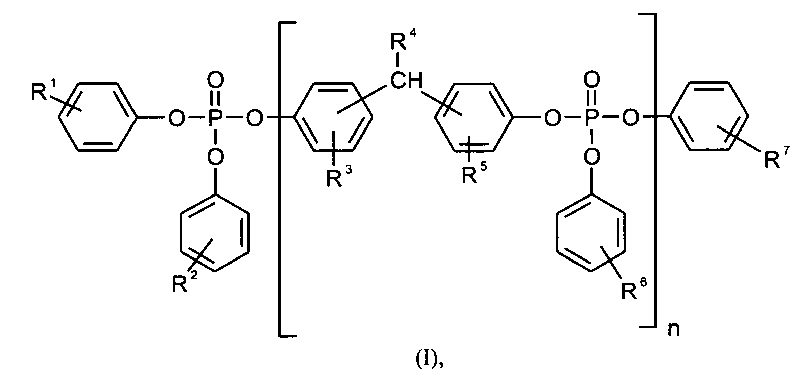 and
b) at least one halogen-free monoaryl phosphate of the general formula (II) 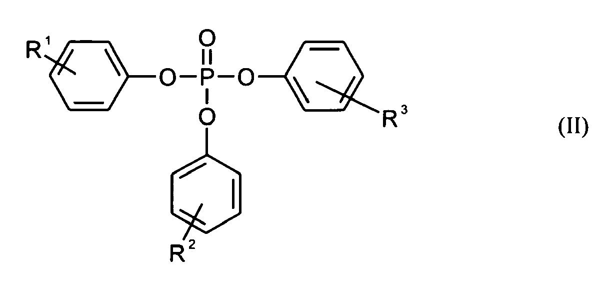 in which
R¹, R², R³, R⁵, R⁶ and R⁷ are in each case, independently of each other, H or a straight-chain, branched or cyclic C₁-C₄-alkyl moiety or phenyl,
R⁴ is H or a straight-chain, branched or cyclic C₁-C₁₀-hydrocarbon moiety and
n is a number from 1 to 20,
for avoidance of scorch and of fogging in and, respectively, from halogen-free, flame-retardant polyurethane foams.

13. Method for the avoidance of fogging and/or scorch from and, respectively, in flame-retardant polyurethane foams, **characterized in that**, as flame retardant, a mixture is used composed of
a) at least one halogen-free polyaryl phosphate of the general formula (I) 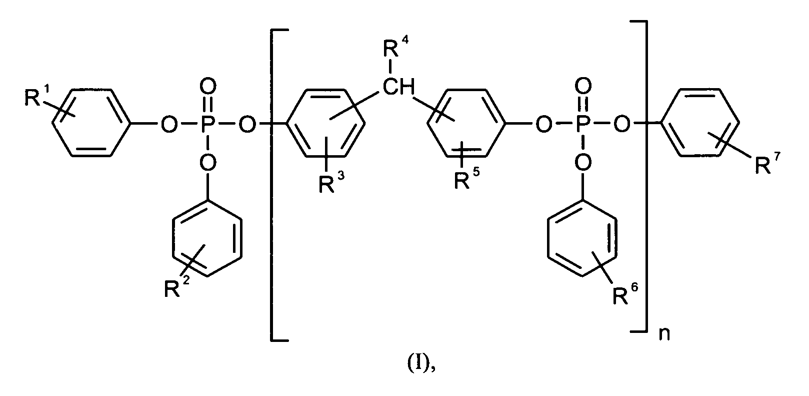 and
b) at least one halogen-free monoaryl phosphate of the general formula (II) 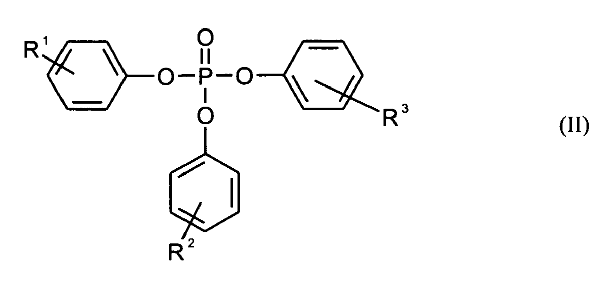 in which
R¹, R², R³, R⁵, R⁶ and R⁷ are in each case, independently of each other, H or a straight-chain, branched or cyclic C₁-C₄-alkyl moiety or phenyl,
R⁴ is H or a straight-chain, branched or cyclic C₁-C₁₀-hydrocarbon moiety and
n is a number from 1 to 20.

## Revendications

1. Mousses de polyuréthane ignifugées, qui contiennent comme agent ignifuge un mélange constitué par
a) au moins un polyarylphosphate exempt d'halogène de formule générale (I) 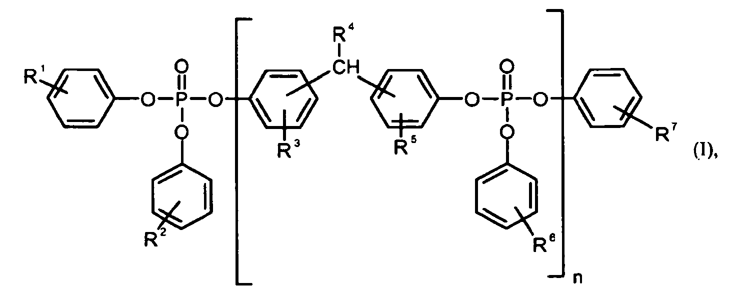 et
b) au moins un monoarylphosphate exempt d'halogène de formule générale (II) 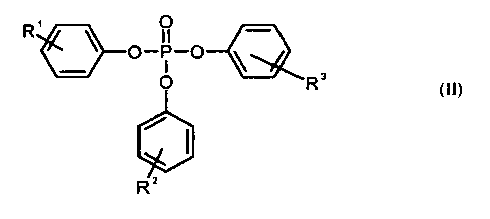 où
R¹, R², R³, R⁵, R⁶ et R⁷ représentent à chaque fois indépendamment l'un de l'autre, H ou un radical C₁-C₄-alkyle linéaire, ramifié ou cyclique, ou phényle,
R⁴ représente H ou un radical hydrocarboné en C₁-C₁₀ linéaire, ramifié ou cyclique et
n vaut un nombre de 1 à 20.

2. Mousses de polyuréthane ignifugées selon la revendication 1, **caractérisées en ce que** R¹_{,} R², R³, R⁵, R⁶ et R⁷ représentent, indépendamment l'un de l'autre, H ou méthyle.

3. Mousses de polyuréthane ignifugées selon les revendications 1 ou 2, **caractérisées en ce que** R⁴ représente H, méthyle ou phényle.

4. Mousses de polyuréthane ignifugées selon au moins l'une quelconque des revendications 1 à 3, **caractérisées en ce qu'**elles contiennent 0,1-20% en poids de polyarylphosphates de formule (I) et 0,1-20% en poids de monoarylphosphates de formule (II).

5. Mousses de polyuréthane ignifugées selon au moins l'une quelconque des revendications 1 à 4, **caractérisées en ce qu'**elles contiennent 0,5-16% en poids de polyarylphosphates de formule (I) et 0,5-16% en poids de monoarylphosphates de formule (II).

6. Mousses de polyuréthane ignifugées selon au moins l'une quelconque des revendications 1 à 5, **caractérisées en ce qu'**il s'agit d'un liquide, pour le mélange de polyarylphosphate et de monoarylphosphate dans la plage de température entre 20°C et 80°C.

7. Mousses de polyuréthane ignifugées selon la revendication 6, **caractérisées en ce que** la viscosité du mélange de polyarylphosphate et de monoarylphosphate à 20°C se situe entre 10 mPa.s et 5000 mPa.s.

8. Mousses de polyuréthane ignifugées selon au moins l'une quelconque des revendications 1 à 7, **caractérisées en ce qu'**il s'agit de mousses souples.

9. Mousses de polyuréthane ignifugées selon au moins l'une quelconque des revendications 1 à 8, **caractérisées en ce qu'**elles contiennent d'autres agents ignifuges.

10. Procédé pour la préparation de mousses de polyuréthane ignifugées par transformation de polyisocyanates organiques avec des composés présentant au moins deux atomes d'hydrogène réactifs par rapport à des groupes isocyanate et éventuellement des agents d'expansion, des stabilisateurs, des activateurs ou d'autres adjuvants et additifs à 20 jusqu'à 80°C, **caractérisé en ce qu'**on utilise comme agent ignifuge un mélange constitué par
a) 0,1 à 40 parties, par rapport à 100 parties de composant polyol, d'au moins un polyarylphosphate exempt d'halogène de formule générale (I) 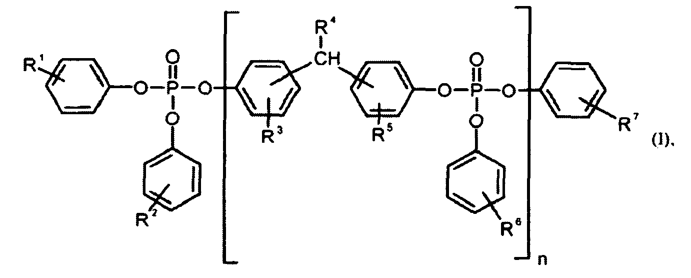 et
b) 0,1 à 40 parties, par rapport à 100 parties de composant polyol, d'au moins un monoarylphosphate exempt d'halogène de formule générale (II) 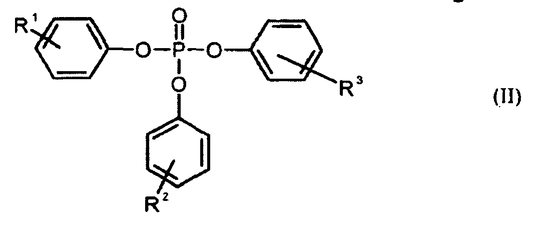 où
R¹, R², R³, R⁵, R⁶ et R⁷ représentent à chaque fois indépendamment l'un de l'autre, H ou un radical C₁-C₄-alkyle linéaire, ramifié ou cyclique, ou phényle,
R⁴ représente H ou un radical hydrocarboné en C₁-C₁₀ linéaire, ramifié ou cyclique et
n vaut un nombre de 1 à 20.

11. Utilisation des mousses de polyuréthane selon au moins l'une quelconque des revendications 1 à 9 dans des rembourrages de meubles, des triplures de textiles, des matelas, des sièges, des accoudoirs, des éléments de construction ainsi que des revêtements de sièges et d'armatures.

12. Utilisation d'un mélange constitué par
a) au moins un polyarylphosphate exempt d'halogène de formule générale (I) 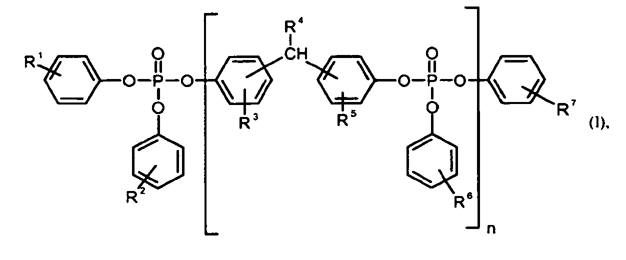 et
b) au moins un monoarylphosphate exempt d'halogène de formule générale (II) 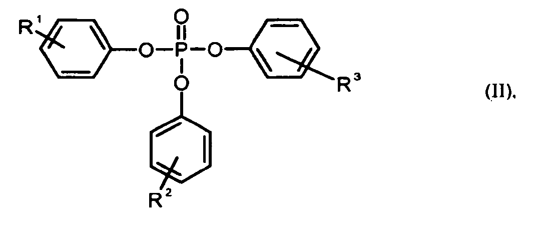 où
R¹, R², R³, R⁵, R⁶ et R⁷ représentent à chaque fois indépendamment l'un de l'autre, H ou un radical C₁-C₄-alkyle linéaire, ramifié ou cyclique, ou phényle,
R⁴ représente H ou un radical hydrocarboné en C₁-C₁₀ linéaire, ramifié ou cyclique et
n vaut un nombre de 1 à 20,
pour éviter le roussissement (scorch) et le dégagement d'émissions condensables (fogging) dans ou provenant des mousses de polyuréthane ignifugées, exemptes d'halogène.

13. Procédé pour éviter le dégagement d'émissions condensables (fogging) et/ou le roussissement (scorch) dans ou provenant des mousses de polyuréthane ignifugées, **caractérisé en ce qu'**on utilise comme agent ignifuge un mélange constitué par
a) au moins un polyarylphosphate exempt d'halogène de formule générale (I) 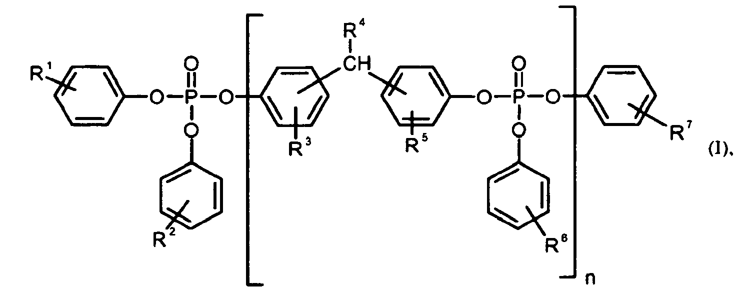 et
b) au moins un monoarylphosphate exempt d'halogène de formule générale (II) 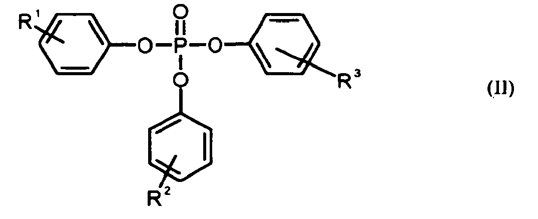 où
R¹, R², R³, R⁵, R⁶ et R⁷ représentent à chaque fois indépendamment l'un de l'autre, H ou un radical C₁-C₄-alkyle linéaire, ramifié ou cyclique, ou phényle,
R⁴ représente H ou un radical hydrocarboné en C₁-C₁₀ linéaire, ramifié ou cyclique et
n vaut un nombre de 1 à 20.
